Europäisches Patentamt

European Patent Office

Office européen des brevets

(11) Veröffentlichungsnummer: **0 401 518**
**A2**

(12) **EUROPÄISCHE PATENTANMELDUNG**

(21) Anmeldenummer: 90108545.6

(22) Anmeldetag: 07.05.90

(51) Int. Cl.5: **B29C 67/14, F16J 15/32,**
**F16C 33/20**

(30) Priorität: 18.05.89 DE 3916137

(43) Veröffentlichungstag der Anmeldung:
12.12.90 Patentblatt 90/50

(84) Benannte Vertragsstaaten:
AT CH DE ES FR GB IT LI SE

(71) Anmelder: BASF Aktiengesellschaft
Carl-Bosch-Strasse 38
D-6700 Ludwigshafen(DE)

(72) Erfinder: Buchert, Hermann, Dr.
An der Nolzeruhe 8c
D-6702 Bad Duerkheim(DE)
Erfinder: Ahlers, Juergen
Beethovenstrasse 32
D-6845 Gross-Rohrheim(DE)
Erfinder: Kohlhaas, Werner
Eichhornshoehe 36
D-6149 Rimbach(DE)
Erfinder: Vogelsang, Joerg, Dr.
In den Kirchgaerten 2
D-6721 Harthausen(DE)
Erfinder: Neitzel, Manfred, Prof, Dr.
Leopoldstrasse 13
D-6700 Ludwigshafen(DE)

(54) **Dichtungselemente und Gleitlager aus faserverstärkten Kunststoffen.**

(57) Die Erfindung betrifft sphärisch geformte Dichtungselemente und Gleitlager aus einem hochschmelzenden thermoplastischen Polykondensations-Kunststoff, der mit tangential orientierten Endlosfasern oder Stapelfasern verstärkt ist.

EP 0 401 518 A2

## Dichtungselemente und Gleitlager aus faserverstärkten Kunststoffen

Die Erfindung betrifft sphärisch geformte Dichtungselemente und Gleitlager aus faserverstärkten temperaturbeständigen thermoplastischen Kunststoffen.

Dichtungen, Kolbenringe und Lagerschalen werden in der Hydraulik, der Pneumatik, im Maschinenbau bei Motoren und Kompressoren, im Apparatebau, bei Antriebsystemen für Flugkörper und auf vielen anderen Gebieten eingesetzt. Wo hohe Temperaturbelastungen herrschen, bestehen die Materialien für diese Elemente üblicherweise aus Metall, Asbest oder aus Graphit; es wurden aber auch schon Kunststoffe, z.B. Polytetrafluorethylen (PTFE) und Polyoxymethylen (POM) eingesetzt. PTFE hält Temperaturen bis 300°C lange Zeit aus, ohne daß chemische Zersetzung eintritt, auch oxidativ-/thermische Zersetzung ist nicht zu befürchten. PTFE-Dichtungen sind aber schwierig herzustellen, da PTFE nicht thermoplastisch ist. Spezielle Herstellverfahren machen Teile aus PTFE teuer. Außerdem verformen sich Teile aus PTFE, wenn sie lange Zeit Druck ausgesetzt sind; dieses Verhalten wird mit Kriechen (Creep) beschrieben. Es ist schon bei geringen Drücken und niedrigen Temperaturen z.B. bei Zimmertemperatur zu beobachten, wenn die Einwirkungsdauer lange ist.

PTFE-Dichtungen erfüllen deshalb nach einiger Zeit ihre Aufgabe nicht mehr, d.h. an den Dichtstellen treten Leckagen auf, die die Zuverlässigkeit des Systems, in das die Dichtung eingebaut ist, mindern und zu teuren Ausfällen führen können.

POM schmilzt bereits bei 160°C und ist deshalb nicht genügend temperaturbeständig; außerdem ist es nicht ausreichend chemikalienbeständig.

Der Erfindung lag die Aufgabe zugrunde, Dichtungselemente und Gleitlager zu entwickeln, die neben Temperatur- und Chemikalienbeständigkeit ein gutes Kriechverhalten aufweisen.

Diese Aufgabe wird erfindungsgemäß durch sphärisch geformte Dichtungselemente und Gleitlager aus faserverstärkten Kunststoffen gelöst, bei denen der Kunststoff ein thermoplastisches Polykondensat mit einer Schmelztemperatur oberhalb von 180°C ist, und die verstärkungsfasern tangential orientierte Endlosfasern oder Stapelfasern mit einer Länge von mindestens 20 mm sind.

Die Dichtungselemente und Gleitlager sind sphärisch geformt, das heißt, sie sind gekrümmt, vorzugsweise rund. Dichtungen und Kolbenringe sind im allgemeinen ringförmig, Lagerschalen sind kugelförmig oder zylinderförmig.

Die eingesetzten Kunststoffe sind thermoplastisch verformbar, ihre Schmelztemperatur liegt oberhalb 180°C, vorzugsweise oberhalb von 200°C und insbesondere oberhalb von 250°C. In der folgenden Tabelle sind einige geeignete Kunststoffe und ihre ungefähre Schmelztemperaturen in °C angegeben:

Polyethylenterephthalat (250)
Polybutylenterephthalat (225)
Polyamid-6 (220)
Polyamid-6.6 (255)
Polyamid-4.6 (295)
Polycarbonat (225)
Polyphenylenether (215)
Polyphenylensulfid (276)
thermopl. Polyimid (260)
Polyetherimid (215)
Polysulfon (185)
Polyamidimid (280)
Polyethersulfon (228)
Polyetherketon PEK (365)
PEEK (342)
PEKEKK (373)
PEEKK (360)
PEKK (405)
Flüssig-kristalline Polyester (> 250)

In Frage kommen natürlich auch entsprechende Copolymere und Mischungen.

Geeignete Verstärkungsfasern sind solche aus Glas, Kohlenstoff oder aromatischem Polyamid. Grundsätzlich kommen auch Metall- und Keramik-Fasern in Frage. Sie liegen entweder als Endlosfasern vor oder als Stapelfasern mit einer Länge von vorzugsweise zwischen 20 und 200 mm, z.B. als "Schappe-Garne" nach DIN 60 900 TG. Auch Gewebe, Gewirke oder Vliese können eingesetzt werden.

Das Gewichtsverhältnis Fasern zu Thermoplast kann in weiten Grenzen zwischen 10:90 und 90:10 schwanken, vorzugsweise liegt es zwischen 30:70 und 70:30.

Die Dichtungselemente oder Gleitlager können übliche Kunststoff-Zusätze enthalten, beispielsweise Molybdänsulfid, Graphit, Silicone oder Polytetrafluorethylen-Pulver zur Verbesserung der Gleitwirkung; ferner Minerale, Pigmente, Inhibitoren und Antioxidantien.

Die Herstellung der Dichtungselemente und Gleitlager erfolgt durch Zusammenbringen von Kunststoff und Fasern, Aufschmelzen des Kunststoffs und gleichzeitiges Verformen zum fertigen Element.

Das Zusammenbringen kann z.B. dadurch erfolgen, daß man die sphärisch bereits vorgeformten, z.B. ringförmig abgelegten Verstärkungsfasern bzw. ausgestanzten textilen Gebilden mit dem Kunststoff in Form einer Lösung, einer Dispersion, von Pulver, Folie oder als Schmelze imprägniert.

Bei einer bevorzugten Ausführungsform werden gemischte Kunststoff/Verstärkungsfasern, z.B. als Hybridgarn nach EP-A 156 599 auf einen Spulenkern gewickelt, wobei der Raum zwischen den beiden radialen Begrenzungen des Spulenkörpers die Dimension der herzustellenden Dichtung hat. Die Spulenkörper bestehen dabei vorzugsweise aus Graphit, Metall, Keramik oder Glas; bei Polyetherketon/Kohlenstoffaser-Kombinationen sind solche aus Graphit bevorzugt.

Nachdem der Wickelkörper den gewünschten Durchmesser erreicht hat, wird er zusammen mit dem Spulenkörper auf eine Temperatur erhitzt, die bei amorphen Thermoplasten über der Glasübergangstemperatur, bei teilkristallinen über dem Schmelzpunkt liegen. Bei der thermischen Behandlung schmelzen die thermoplastischen Partikel, Fasern oder Bändchen und füllen die Hohlräume zwischen den unschmelzbaren Fasern.

Durch die größeren thermischen Ausdehnungskoeffizienten der Kunststoffe und den relativ kleinen thermischen Ausdehnungskoeffizienten des Metalls, aus dem der Spulenkörper gefertigt ist, entsteht in dem Wickel Druck, der das thermoplastische Material in die Zwischenräume der Faserbündel drückt. Diesem Druck wirkt die Zugfestigkeit der Fasern entgegen, so daß der Wickel auf der zylindrischen Außenseite nicht eingeschlossen werden muß. Die thermische Behandlung kann in heißen Flüssigkeiten, Gasen, geschmolzenen Metallen, geeigneten Induktionsspulen etc. durchgeführt werden.

Die fertige Dichtung wird von dem Spulenkern gestreift, nachdem ein Flansch von dem Spulenkern abgenommen worden ist.

Zur Fertigung in hohen Losgrößen erscheint die Herstellung eines Rohres über Kernwickeltechnik und anschließendes Abschneiden von Ringen z.B. durch Laser sinnvoll.

Die erfindungsgemäßen Dichtungselemente und Gleitlager sind im Vergleich zu solchen aus verstärkungsfaserfreien Thermoplasten preisgünstig, vor allem haben sie eine wesentlich geringere Neigung zum Kriechen, da die Fasern in dem spiralförmig aufgebauten Wickelkörper dem Kriechen des in den Zwischenräumen enthaltenen Thermoplasten stark entgegenwirken. Wesentlich ist auch, daß die erfindungsgemäßen Dichtungen die arbeitshygienisch bedenklichen Asbest-Dichtungen ersetzen können.

Ein nach EP-A 156 599 hergestelltes Hybridgarn mit einem Durchmesser von 1 mm aus 40 Vol.-% Polyetheretherketon-Fasern und 60 Vol.-% Kohlenstoff-Fasern wird auf eine Welle mit Durchmesser 50 mm aus Graphit gewickelt. Zur zeitlichen Begrenzung des Wickelkörpers sind auf die Welle zwei Flansche im Abstand von 9 mm angebracht. Zwischen Wickelkörper und Flansch werden Trennfolien eingelegt. Es wird solange Hybridgarn auf die Welle gewickelt, bis der Wickelkörper eine Dicke von 100 mm (Außendurchmesser) erreicht hat. Dann werden die Flansche bei einer Temperatur von 420°C und einem Druck von 19 bar 1 Stunde lang auf einen Abstand von 7 mm zusammengepreßt. Nach dem Abkühlen läßt sich die Trennfolie leicht entfernen. Der entstandene kompakte Dichtungsring wird von der Welle abgenommen und auf die Abmessungen, Durchmesser außen = 76 mm, Durchmesser innen = 50 mm, Breite = 6,5 mm spanend bearbeitet.

## Ansprüche

1. Sphärisch geformte Dichtungselemente und Gleitlager aus einem faserverstärkten Kunststoff, dadurch gekennzeichnet, daß der Kunststoff ein thermoplastisches Polykondensat mit einer Schmelztemperatur oberhalb von 180°C ist, und die Verstärkungsfasern tangential orientierte Endlosfasern oder Stapelfasern mit einer Länge von mindestens 20 mm sind.

2. Dichtungselemente und Gleitlager nach Anspruch 1, dadurch gekennzeichnet, daß der Kunststoff ein Polyester, ein Polyamid, Polycarbonat, ein Polyphenylenether, Polyphenylensulfid, ein Polyimid, ein Polyetherimid, ein Polyethersulfon oder vorzugsweise ein Polyetherketon ist.

3. Dichtungselemente und Gleitlager nach Anspruch 1, dadurch gekennzeichnet, daß die Verstärkungsfasern Glas-, Kohlenstoff- oder Aramidfasern sind.